(19) Europäisches Patentamt
European Patent Office
Office européen des brevets

(11) EP 3 719 025 A1

(12) **EUROPEAN PATENT APPLICATION**
published in accordance with Art. 153(4) EPC

(43) Date of publication:
**07.10.2020 Bulletin 2020/41**

(21) Application number: **18882891.7**

(22) Date of filing: **09.11.2018**

(51) Int Cl.:
*C07F 7/08* (2006.01) *C08F 30/08* (2006.01)

(86) International application number:
**PCT/JP2018/041706**

(87) International publication number:
**WO 2019/107117 (06.06.2019 Gazette 2019/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.11.2017 JP 2017229204**

(71) Applicant: **Shin-Etsu Chemical Co., Ltd.**
**Tokyo 100-0004 (JP)**

(72) Inventor: **OKAMURA, Kaoru**
**Annaka-shi**
**Gunma 379-0224 (JP)**

(74) Representative: **V.O.**
**P.O. Box 87930**
**2508 DH Den Haag (NL)**

(54) **SILOXANE COMPOUND AND METHOD FOR PRODUCING SAME**

(57) It is an object of the present invention to provide a method for producing, in high purity, a polysiloxane compound which has a glycerol (meth)acrylate moiety. It is another object to provide a siloxane compound which has good purity, and sufficient compatibility with other polymerizable monomers, and provides ophthalmic devices with high oxygen permeability. The present invention provides a method for preparing a (meth)acrylic group-containing siloxane, comprising a step of reacting a compound represented by the following formula (2):

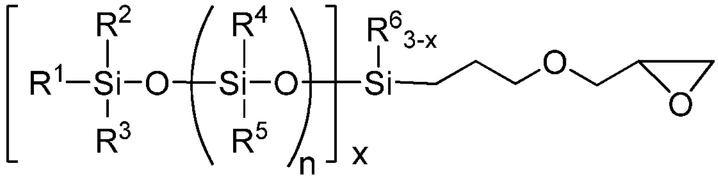

(2)

wherein in the case where $R^1$, $R^2$ and $R^3$ are all an unsubstituted hydrocarbon group, the $R^1R^2R^3Si$- group has a total steric parameter value of -5.00 or less, the parameter indicating steric bulkiness of the unsaturated hydrocarbon groups bonded to the silicon atom; and in the case where at least one of $R^1$, $R^2$ and $R^3$ is a substituted hydrocarbon group wherein a part or all of the hydrogen atoms each bonded to a carbon atom are substituted each with a halogen atom, the total steric parameter value of the group is -5.00 or less, supposing that all of the halogen atoms are replaced with a hydrogen atom, with (meth)acrylic acid to obtain a compound represented by the following formula (I).

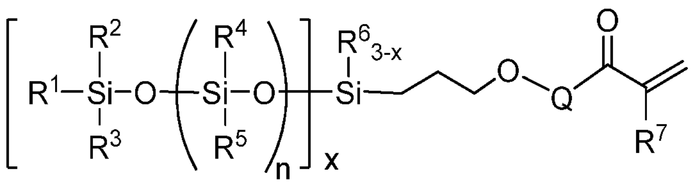

(I)

The present invention further provides the compound represented by formula (I).

EP 3 719 025 A1

## Description

### TECHNICAL FIELD

The present invention relates to a monomer of a polysiloxane having excellent wettability, which is suitable for manufacturing medical devices, and a method for manufacturing the same. In particular, the present invention relates to a compound which is excellent in compatibility with other polymerizable monomers such as (meth)acrylic monomers, and provides a (co)polymer having excellent transparency and suitable for application in medical devices, including ophthalmic devices. The present invention also provides a method for producing the compound with high purity.

### BACKGROUND OF THE INVENTION

Various siloxane compounds are known as monomers for the manufacture of ophthalmic devices. For instance, Patent Literature 1, 2, and 3 describe siloxane compounds having a glycerol methacrylate group represented by the following formulae (20) or (20'), and methylbis(trimethylsiloxy)silylpropylglycerol methacrylate (SiGMA).

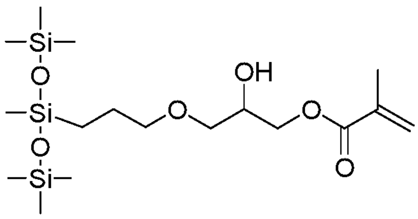
(20)

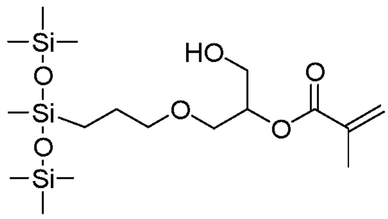
(20')

SiGMA is widely used as a monomer for soft contact lenses. SiGMA is a molecule formed by addition reactipon of methacrylic acid with an epoxy-modified siloxane compound, and exhibits good hydrophilicity because of the hydroxyl group in the monomer. Therefore, it has an advantage in its excellent compatibility with hydrophilic monomers, such as 2-hydroxyethyl methacrylate, N,N-dimethylacrylamide, and N-vinyl-2-pyrrolidone. SiGMA is prepared by the addition reaction of a carboxylic acid with an epoxy-modified siloxane compound, and side reactions due to the formed hydroxyl group and side reactions between the carboxylic acid and the siloxane moiety cannot be avoided. Further, compounds having two hydroxyl groups in a molecule are also by-produced, resulting in a low purity of the envisaged siloxane compounds.

Patent Literature 4 describes a method for purifying a siloxane compound having a glycerol methacrylate moiety by a silica gel column. However, the improvement in purity by a silica gel column purification is limited and, therefore, is difficult to practice it industrially.

### PRIOR ART LITERATURE

### [PATENT LITERATURE]

Patent Literature 1: Japanese Patent Application Laid-Open Sho54-55455
Patent Literature 2: Japanese Patent Application Laid-Open Sho56-22325
Patent Literature 3: Japanese Patent Application Laid-Open No.2004-182724
Patent Literature 4: Japanese Patent Application Laid-Open No.2006-169140

### SUMMARY OF THE INVENTION

### PROBLEMS TO BE SOLVED BY THE INVENTION

As described above, siloxane compounds having a glycerol (meth)acrylate moiety are suitable for manufacturing ophthalmic devices, and are known to have high oxygen permeability and compatibility with hydrophilic monomers. A method is desired for producing the siloxane compound having a glycerol (meth)acrylate moiety with a high purity in a simple manner. The copolymer with SiGMA has a large number of a hydroxyl groups which cause a hydrogen bond in the molecule, resulting in deteriorated solubility and transparency. Therefore, there is a need to develop a siloxane compound which provides a transparent polymer having excellent solubility.

It is an object of the present invention to provide a method for producing, in high purity, a polysiloxane compound which has a glycerol (meth)acrylate moiety. It is another object to provide a siloxane compound which has good purity, and sufficient compatibility with other polymerizable monomers, and provides ophthalmic devices with high oxygen permeability.

## MEANS TO SOLVE THE PROBLEMS

As a result of intensive research to solve the above-mentioned problems, the present inventors have found that in the addition reaction between an epoxy-modified siloxane compound having a bulky substituent on a silicon atom of the polysiloxane with a carboxylic acid, side reactions of a formed hydroxyl group and side reactions between the carboxylic acid and the siloxane moiety are suppressed, so that a siloxane compound having a glycerol (meth) acrylate moiety can be obtained in a high purity. Further, it has been found that a (co)polymer obtained from the glycerol (meth)acrylate-containing siloxane compound having a bulky substituent at the terminal is superior in solubility in solvents such as acetone, compared to (co)polymers obtained from SiGMA and, thus, the inventors have made the present inventions.

That is, the present invention provides a method for preparing a (meth) acrylic group-containing siloxane, comprising a step of reacting a compound represented by the following formula (2) :

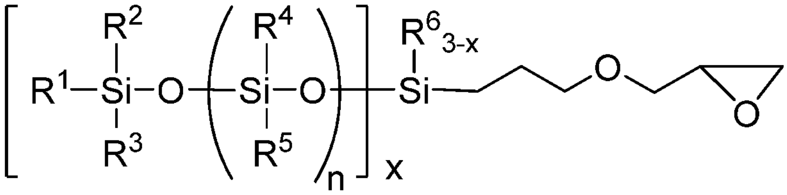

(2)

wherein $R^1$ to $R^3$ are, independently of each other, an unsubstituted monovalent hydrocarbon group having 1 to 10 carbon atoms, or a substituted form of the monovalent hydrocarbon group in which a part or all of the hydrogen atoms each bonded to a carbon atom are substituted each with a halogen atom, $R^4$ to $R^6$ are, independently of each other, a monovalent hydrocarbon group having 1 to 10 carbon atoms, x is an integer of from 1 to 3, and n is an integer of from 0 to 20;

in the case where $R^1$, $R^2$ and $R^3$ are all an unsubstituted hydrocarbon group, the $R^1R^2R^3Si$- group has a total steric parameter value of -5.00 or less, the parameter indicating steric bulkiness of the unsaturated hydrocarbon groups bonded to the silicon atom; and in the case where at least one of $R^1$, $R^2$ and $R^3$ is said substituted hydrocarbon group, the total steric parameter value of the group is -5.00 or less, supposing that all of the halogen atoms are replaced with a hydrogen atom,

with (meth)acrylic acid to obtain a compound represented by the following formula (I):

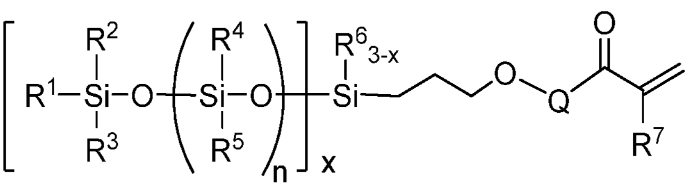

(I)

wherein Q is a divalent group represented by the following formula (1) or (1') , $R^1$ to $R^6$, n and x are as defined above, and $R^7$ is a hydrogen atom or a methyl group;

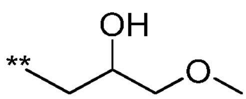

(1)

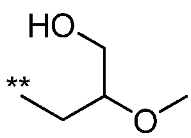

(1')

wherein the site indicated by "**" is a position of bonding to the oxygen atom in the formula (I).

The present invention further provides a compound represented by formula (I):

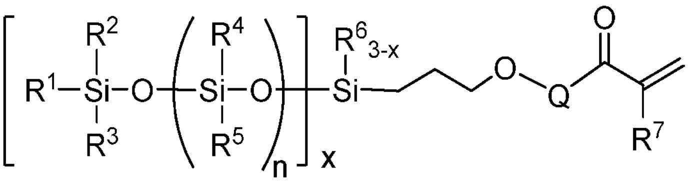

(I)

wherein Q is a divalent group represented by the following formula (1) or (1'),

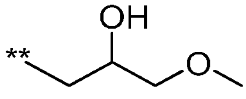

(1)

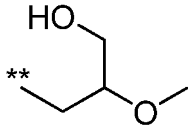

(1')

the site indicated by "**" is a position of bonding to the oxygen atom in the formula (I),

$R^1$ to $R^3$ are, independently of each other, an unsubstituted monovalent hydrocarbon group having 1 to 10 carbon atoms, or a substituted form of the monovalent hydrocarbon group in which a part or all of the hydrogen atoms each bonded to a carbon atom are substituted each with a halogen atom, $R^4$ to $R^6$ are, independently of each other, a monovalent hydrocarbon group having 1 to 10 carbon atoms, x is an integer of from 1 to 3, and n is an integer of from 0 to 20;

in the case where $R^1$, $R^2$ and $R^3$ are all an unsubstituted hydrocarbon group, the $R^1R^2R^3Si$- group has a total steric parameter value of -5.00 or less, the parameter indicating steric bulkiness of the unsubstituted hydrocarbon groups bonded to the silicon atom; and in the case where at least one of $R^1$, $R^2$ and $R^3$ is said substituted hydrocarbon group, the total steric parameter value of the group is -5.00 or less, supposing that all of the halogen atoms are replaced with a hydrogen atom, and

further provides a (co)polymer obtained from the compound and an ophthalmic device comprising the (co)polymer.

## EFFECT OF THE INVENTION

According to the preparation method of the present invention, a siloxane compound having a glycerol (meth)acrylate moiety is produced in a high purity. The compound of the present invention is sufficiently compatible with other hydrophilic monomers and provides a polymer which has a beneficial oxygen permeability. Accordingly, the present compound and process for preparing the compound have utility in the manufacture of ophthalmic devices.

## DETAILED DESCRIPTION OF THE INVENTION

The preparation method of the present invention is characterized in that an epoxy-modified polysiloxane compound having a bulky substituent on a silicon atom of the polysiloxane is addition polymerized with methacrylic acid or acrylic acid. That is, the compound represented by the aforementioned formula (2) has the terminal triorganosilyl group ($R^1R^2R^3Si$-) which has a bulky three-dimensional structure. On account of the terminal triorganosilyl group having a bulky three-dimensional structure, the reactivity of the hydroxyl group which is by-produced in the reaction with (meth) acrylic acid is suppressed, so that the siloxane compound represented by the aforementioned formula (I) is obtained in a high purity. Furthermore, intramolecular hydrogen bonding of the hydroxyl group is suppressed by the influence of the bulky group in the (co)polymer obtained from the compound of the aforementioned formula (I) having a bulky three-dimensional structure at the terminal, and the obtained (co) polymer has good solubility in solvents such as acetone.

That is, the present invention provides a compound represented by formula (I) below, which is characterized by having a bulky three-dimensional structure at the terminal.

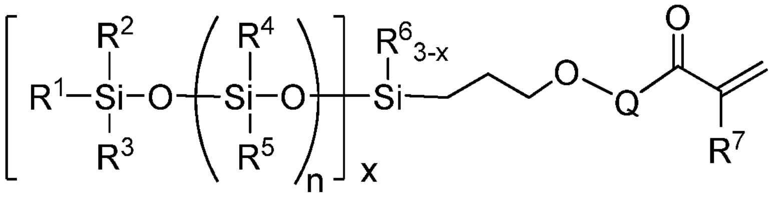

(I)

In the above formula (I), when $R^1$, $R^2$ and $R^3$ are all an unsubstituted hydrocarbon group, the $R^1R^2R^3Si$- group has a total steric parameter value of -5.00 or less, the parameter indicating steric bulkiness of the unsubstituted hydrocarbon groups bonded to the silicon atom; and when at least one of $R^1$, $R^2$ and $R^3$ is said substituted hydrocarbon group, the total steric parameter value of the group is -5.00 or less, supposing that all of the halogen atoms are replaced with a hydrogen atom.

In the aforementioned formula (I), Q is a divalent group represented by the following formula (1) or (1');

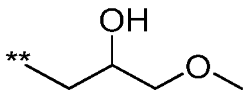 (1) 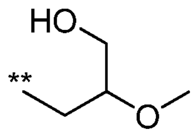 (1')

wherein the site indicated by "**" is a position of bonding to the oxygen atom in the formula (I).
The compound having the group of the aforementioned formula (1) and the compound having the group of the aforementioned formula (1') are in relation of structural isomers. The compound (I) obtained by the preparation method of the present invention may be a mixture of these structural isomers.

$R^1$, $R^2$ and $R^3$ are, independently of each other, an unsubstituted monovalent hydrocarbon group having 1 to 10 carbon atoms, preferably 1 to 7 carbon atoms, or a substituted form of the monovalent hydrocarbon group in which a part or all of the hydrogen atoms each bonded to a carbon atom are substituted each with a halogen atom. The unsubstituted monovalent hydrocarbon groups include alkyl groups such as methyl, ethyl, propyl, butyl, pentyl, hexyl, heptyl, octyl, nonyl, and decyl groups; cycloalkyl groups such as cyclopentyl and cyclohexyl groups; aryl groups such as phenyl and tolyl groups; alkenyl groups such as vinyl and allyl groups; and aralkyl groups such as a benzyl groups. A part or all of the hydrogen atoms bonded to the carbon atoms of these groups may be substituted with a halogen atom, such as chlorine and fluorine atoms. Preferred are alkyl groups having 1 to 7 carbon atoms, a phenyl group, and those groups in which a part or all of the hydrogen atoms bonded to the carbon atoms of the group are substituted with a fluorine atom. $R^1$, $R^2$ and $R^3$ are selected from the aforesaid groups in a combination such that the $R^1R^2R^3Si$- group satisfies the requirement on a steric parameter described below. In particular, $R^1$, $R^2$ and $R^3$ are preferably an alkyl group having 2 to 7 carbon atoms. If the number of carbon atoms is too large, the steric hindrance is larger, but the amount of the siloxane moiety is smaller so that the property derived from the siloxane may appear less.

The steric parameter of the $R^1R^2R^3Si$- group will be described in more detail below.

Taft's steric parameter is known as an indication of steric bulkiness of a hydrocarbon group (substituent or R). This parameter indicates the steric bulkiness (three-dimensional extent) of a hydrocarbon group (substituent). For instance, Taft's parameters of hydrocarbon groups bonded to a silicon atom are described in Shimizu, N. et al., "A Quantitative Scale for the Structural Effect on Reactivity toward Nucleophilic Displacement at Silicon"; Chemistry Letters (1992), 21(7), p. 1263-1266; and Shimizu, N. et al., "Prediction of Structural Effects of Trialkyl Groups on Reactivity toward Nucleophilic Displacement at Silicon"; Chemistry Letters (1993), 22(10), p.1807-1810.
The steric parameter is represented by the following equation (a) :

$$S(A) = \log k_{rel} \quad (a)$$

wherein $\log k_{rel}$ is a logarithmic value of a hydolysis rate of an organochlorosilane ($R^1R^2R^3SiCl$), relative to trimethylchlorosilane in an 89 mol% aqueous 1,4-dioxane solution at 25°C; and "A" denotes substituent R.
It is also known that this steric parameter satisfies the equations (b), (c), (d) and (e) shown below, and it is possible to estimate the value of the steric parameter for a silicon atom having various substituents.

$$S(ACH_2) = 0.20S(A) - 0.57 \quad (b)$$

$$S(A^1A^2A^3C) = S(A^1CH_2) + 1.6S(A^2CH_2) + 4.0S(A^3CH_2) \quad (c)$$

$$S(AO) = 0.39S(A) - 0.34 \quad (d)$$

$$S(A^1A^2A^3Si) = S(A^1) + 1.15S(A^2) + 1.35S(A^3) \quad (e)$$

It is noted that |S ($A^1CH_2$)| is greater than |S ($A^2CH_2$)|, and |S ($A^2CH_2$)| is greater than |S ($A^3CH_2$)|. It is also noted that |S($A^1$)| is greater than |S($A^2$)|, and |S($A^2$)| is greater than |S($A^3$)|. The smaller the steric parameter is, the greater the steric hindrance on the silicon atom is.

Steric parameter values of trialkylsiliy groups are given in Shimizu, N. et al., "Prediction of Structural Effects of Trialkyl Groups on Reactivity toward Nucleophilic Displacement at Silicon"; Chemistry Letters (1993), 22(10), p.1807-1810.

For instance, steric parameter values of $RMe_2Si$- groups are shown in Table 1 below, wherein R is methyl, ethyl, n-propyl, n-butyl, isopropyl or t-butyl. Here, it is noted that smaller the parameter, the greater the steric hindrance.

Table 1

| Substituent R in an $RMe_2Si$ group | Steric parameter |
|---|---|
| Me | 0.00 |
| Et | -0.57 |
| n-Pr | -0.68 |
| n-Bu | -0.71 |
| i-Pr | -1.48 |
| t-Bu | -3.76 |

The steric parameter values of $R^1R^2R^3Si$- groups are shown in Table 2 below, where the $R^1R^2R^3Si$ group is di(n-butyl)methylsilyl group, tri(n-butyl)silyl group, triethylsilyl group, diphenylmethylsilyl group, tri(isopropyl)silyl group or tri(t-butyl)silyl group.

Table 2

| $R^1R^2R^3Si$ group | Steric parameter |
|---|---|
| $(n\text{-}Bu)_2MeSi$ | -1.53 |
| $(n\text{-}Bu)_3Si$ | -2.49 |
| $Et_3Si$ | -2.00 |
| $Ph_2MeSi$ | -1.83 |
| $(i\text{-}Pr)_3Si$ | -5.18 |
| $(t\text{-}Bu)_3Si$ | -13.16 |

In the present invention, the three-dimensional structure of the organosilyl group (i.e., $R^1R^2R^3Si$-) is specif ied by the aforementioned steric parameter. The compounds of the aforesaid formulas (2) and (I) have one, two or three, preferably two or three, $R^1R^2R^3Si$- groups and the total steric parameter is -5.00 or less, preferably -7.00 or less.

A preferable structure that satisfies the steric parameter requirement may be such that at least one of $R^1$, $R^2$, and $R^3$ is a group selected from isopropyl, t-butyl or pheny. Another preferable structure may be such that all of $R^1$, $R^2$ and $R^3$ are one kind of group selected from ethyl, n-propyl, isopropyl or n-butyl groups.

Particularly preferred structures are shown below. The site indicated by "*" is the position of bonding to an oxygen atom in the following formula.

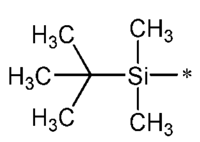
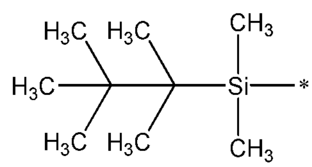

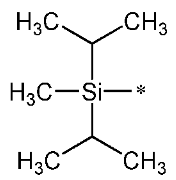
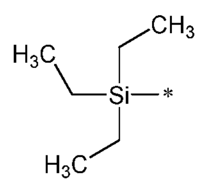
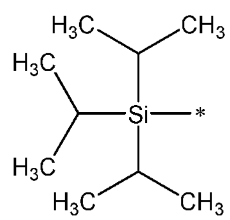

On account of the one, two or three groups, preferably two or three groups, indicated above, the total steric parameter value of the $R^1R^2R^3Si$- group should be less than or equal to -5.00, preferably less than or equal to -7.00.

As described above, the steric parameter value is to specify the steric bulkiness of the terminal triorganosilyl group in the compound according to the invention. In the case where at least one of $R^1$, $R^2$ and $R^3$ is substituted with a halogen atom, the total steric parameter value of the group is -5.00 or less, preferably -7.00 or less, supposing that all of the halogen atoms are replaced with a hydrogen atom. Examples of the halogen atom include chlorine, fluorine and bromine. Particularly preferably, at least one of the hydrogen atoms each bonded to a carbon atom of the abovementioned monovalent hydrocarbon group is substituted with a halogen atom such as a fluorine atom. For instance, the following structure may be mentioned. Here, the site indicated by "*" in the following formula is the position of bonding to the oxygen atom.

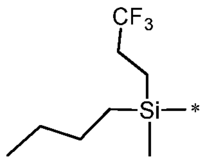

In this case, the total steric parameter should satisfy the aforesaid requirement, supposing that the fluorine atoms are replaced with a hydrogen atom. Thus, the total-steric parameter of an n-butyl-methyl-3,3,3-trifluoropropylsilyl group at the terminal is that of an n-butyl-methyl-propylsilyl group in which the 3,3,3-trifluoropropyl group mentioned above is replaced by a propyl group under the supposition.

In the aforementioned formulae (2) and (I), $R^4$ to $R^6$ are, independently of each other, a monovalent hydrocarbon group having 1 to 10 carbon atoms, preferably a methyl group, an ethyl group, or a propyl group, more preferably a methyl group. $R^7$ is a hydrogen atom or a methyl group.

In the aforementioned formulae (2) and (I), n is an integer of 0 to 20, preferably 0 or 1 to 10, more preferably 0 or 1 to 5. If n exceeds the above upper limit, the influence of the steric bulkiness of the triorganosilyl terminal group is small. Particularly preferably, n is 0.

In the aforementioned formulae (2) and (I), x is an integer of 1 to 3, preferably 2 or 3.

The preparation method of the present invention will be described below in further detail.

The compound represented by Formula (I) is prepared by addition-reacting the compound represented by Formula (2) below

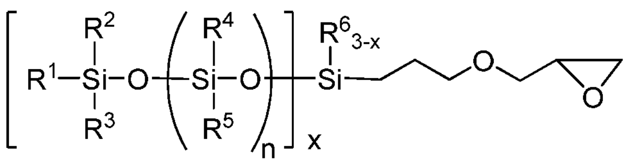

(2)

wherein $R^1$ to $R^6$, n, and x are as defined above, with a methacrylic acid or an acrylic acid.

The compound represented by formula (2) is prepared by reacting the compound represented by formula (3) below

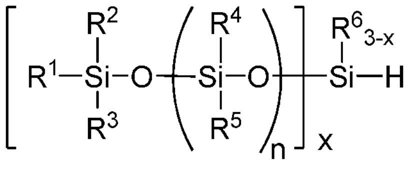

(3)

wherein $R^1$ to $R^6$, n, and x are as defined above, with allylglycidylether.

The compound represented by formula (3) is prepared by reacting a compound represented by formula (4) below or a metal salt thereof

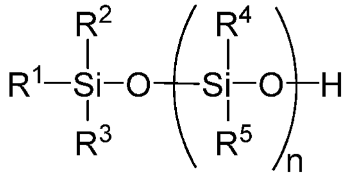

(4)

wherein $R^1$ to $R^5$, and n are as defined above, with a compound represented by the following formula (5)

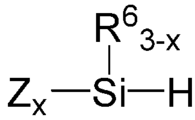

(5)

wherein $R^6$, and x are as defined above, and Z is a hydrolyzable group.

In formula (5), Z is a hydrolyzable group, preferably a halogen atom such as a fluorine, chlorine, bromine, or iodine atom, or an alkoxy group such as a methoxy group or an ethoxy group, particularly preferably a chlorine atom, a methoxy group or an ethoxy group.

The aforesaid preparation method may be carried out according to a known method. For instance, the compound represented by the aforementioned formula (3) is obtained by adding the compound (5) to the compound (4) in an amount of at least 1 molar equivalent relative to the hydrolyzable group Z, and reacting them with each other. For instance, bis(t-butyldimethylsiloxy)methylsilane is obtained by a reaction of t-butyldimethylsilanol with diethoxymethylsilane. Here, ethanol is by-produced. Next, at least 1 molar equivalent of allylglycidylether is added to the obtained compound (3), and an addition reaction is carried out to obtain a compound represented by the aforementioned formula (2). The addition reaction is preferably carried out in the presence of a hydrosilylation catalyst. Next, at least 1 molar equivalent of methacrylic acid or acrylic acid is added to the obtained compound (2), and they are addition-reacted with each other to obtain a compound represented by the aforementioned formula (I). Here, a catalyst may be used. These reactions are typically conducted at a temperature of from about 0 degrees C to about 150 degrees C, but is not particularly limited. Preferably, the temperature does not exceed the boiling point of a solvent used.

In the aforementioned preparation method, the compound (4) is added typically in an amount of at least 1 molar equivalent, relative to the hydrolyzable group Z of the compound (5). If the amount is less than the lower limit, the hydrolyzable group remains, which is unpreferable. There is no upper limit, but the amount is preferably 1 to 3 mol equivalents in view of yield and economy. The compound (4) may be a metal salt thereof. Examples of the metal include, but are not limited to, an alkali metal such as lithium and sodium, and alkaline earth metals such as magnesium and calcium. For instance, a lithium salt of t-butyldimethylsilanol is lithium t-butyldimethylsilanolate.

The amount of allylglycidylether may typically be at least 1 molar equivalent, relative to the compound (3). If the amount is less than the lower limit, a hydrosilyl group remains, which is unpreferable. There is no upper limit, but the amount is preferably 1 to 3 molar equivalents. A larger amount of allylglycidylether is unpreferable in view of yield and economy.

The hydrosilylation catalyst may be any conventional one. For instance, noble metal catalysts, in particular, platinum catalyst derived from chloroplatinic acid is suitable. It is preferable to completely neutralize the chloride ions of chloroplatinic acid with sodium bicarbonate to improve the stability of the platinum catalyst. The amount of the catalyst added may be a catalytic amount for promoting the addition reaction. The temperature in the addition reaction is not particularly limited, and may be appropriately adjusted. The temperature is preferably 20 degrees C to 150 degrees C, more preferably 50 degrees C to 120 degrees C. The reaction time may be, for instance, 1 to 12 hours, preferably 3 to 8 hours.

The amount of methacrylic acid or acrylic acid added may typically be at least 1 molar equivalent, relative to the compound (2) . If the amount is less than the lower limit, an epoxy group remains, which is unpreferable. There is no upper limit, but the amount is preferably 1 to 5 molar equivalents. A larger amount of methacrylic acid or acrylic acid is unpreferable in view of yield and economy.

The catalyst used in the addition reaction of the carboxylic acid may be any conventional epoxy-curing catalyst, such as acid catalysts, base catalysts, organometallic catalysts, and amine catalysts. Examples of the acid catalyst include, but are not limited to, hydrochloric acid, sulfuric acid, boron trifluoride, boron trichloride, magnesium chloride, magnesium bromide, aluminum trichloride, aluminum bromide, zinc chloride, tin(IV) chloride, iron(III) chloride, antimony(V) fluoride, antimony (V) chloride, phosphorus trichloride, phosphorus pentachloride, phosphorus oxychloride, titanium tetrachloride, titanium trichloride, zirconium chloride, and tetraisopropoxy titanium. Examples of the base catalyst

include, but are not limited to, metal hydroxides such as lithium hydroxide, sodium hydroxide, potassium hydroxide, magnesium hydroxide, and calcium hydroxide, and neutralized salts such as lithium (meth)acrylate, sodium (meth)acrylate, and potassium (meth) acrylate. Examples of the organometallic catalyst include, but are not limited to, organotin catalysts such as stanna diacetate, stanna dioctate, stanna dioleate, stanna dilaurate, dibutyltin oxide, dibutyltin diacetate, dibutyltin dilaurate, dibutyltin dichloride, and dioctyltin dilaurate; and acetylacetone metals, such as acetylacetone aluminu, acetylacetone iron, acetylacetone copper, acetylacetone zinc, acetylacetone beryllium, acetylacetone chromium, acetylacetone indium, acetylacetone manganese, acetylacetone molybdenum, acetylacetonate titanium, acetylacetonate cobalt, acetylacetonate vanadium, and acetylacetone zirconium. The amine catalysts include pentamethyldiethylenetriamine, triethylamine, N-methylmorpholine bis(2-dimethylaminoethyl)ether, N,N,N',N",N"-pentamethyldiethylenetriamine, N,N,N'-trimethylaminoethyl-ethanolamine, bis(2-dimethylaminoethyl)ether, N-methyl-N'N'-dimethylaminoethylpiperazine, N,N-dimethylcyclohexylamine, diazabicycloundecene, triethyldiamine, tetramethylhexamethylenediamine, N-methylimidazole, trimethylaminoethylpiperazine, tripropylamine, tetramethylammonium salt, and tetraethylammonium salt. The amount of the catalyst may be a catalytic amount for promoting the addition reaction. The temperature of the addition reaction is not particularly limited, and may be appropriately adjusted. In particular, the temperature is 20 degrees C to 150 degrees C, more preferably 50 degrees C to 120 degrees C. The reaction time may be, for instance, from 1 to 30 hours, preferably from 5 to 20 hours.

A reaction solvent is preferably used in the aforesaid reaction. The solvent is not particularly limited. For instance, hydrocarbon solvents such as hexane or heptane, aromatic solvents such as toluene, ether solvents such as tetrahydrofuran, ketone solvents such as methyl ethyl ketone or N,N-dimethylformamide, ester solvents such as ethyl acetate, or the like, are suitably used.

After the completion of the reaction, purification may be carried out according to a conventional manner. The organic layer is washed with water and then the solvent is removed to isolate the product. Alternatively, vacuum distillation or activated carbon treatment may be used.

In an embodiment of the preparation method of the present invention, the compound (5) is added dropwise to 1.5 molar equivalents of the compound (4), relative to the hydrolyzable group Z of the compound (5) . At this time, the dropping rate is adjusted so that the internal temperature is kept at 30 degrees C or below. After the dropwise addition, the reaction is continued at room temperature for about 1 hour to complete the reaction. After the completion of the reaction, the organic layer is washed with water. When the pH of the washing liquid becomes near neutral (pH=6 to 8), the organic layer is taken out. The siloxane compound represented by the aforementioned formula (3) is obtained by distilling off the solvent and any unreacted raw materials present in the organic layer at a reduced pressure. Next, 1.2 molar equivalents of allylglycidylether are added to the siloxane compound (3), and an internal temperature is raised to 80 degrees C. To this, is added a toluene solution of sodium bicarbonate-neutralized chloroplatinic acid/vinylsiloxane complex (platinum content: 0. 5wt%) in an amount of 10ppm in terms of platinum. The reaction is completed at an internal temperature of at 180 degrees C or higher for about 3 hours. After the completion of the reaction, the solvent and any unreacted raw materials are distilled off at a reduced pressure to obtain the compound represented by the aforementioned formula (2). Next, 4 molar equivalents of (meth)acrylic acid and 0.2 equivalents of sodium (meth)acrylate are added to the obtained compound (2), and the internal temperature is raised to 100 degrees C. The internal temperature is maintained at 100 degrees C or higher for about 12 hours to complete the reaction. Here, the progress of the reaction is confirmed by monitoring the presence of the compound (2) by GC measurement. After the completion of the reaction, 100 parts by mass of n-hexane is added to the organic layer, and the organic layer is washed with an aqueous 2 mole/L sodium hydroxide solution and water. When the pH of the washing liquid becomes near neutral (pH=6 to 8), the organic layer is taken out. The siloxane compound represented by the aforementioned formula (I) is obtained by distilling off the solvent and any unreacted raw materials present in the organic layer at a reduced pressure.

According to the preparation method of the present invention, the compound represented by the aforementioned formula (I) is obtained with high purity. Preferably, one kind of the compound having specific n, x and $R^1$ to $R^7$ accounts for more than 95% by mass, more preferably at least 97% by mass, of the total mass of all kinds of the compound, provided that Q may be a mixture of structural isomers represented by the formulas (1) and (1'). The content of a specific one kind of the compound having a specific structure is determined by gas chromatography (hereinafter referred to as "GC") . Detailed conditions for GC will be described later. If a specific one kind having a specific structure is less than 95% by mass of the total mass of the compound, for instance, if a compound formed by a side reaction by a hydroxyl group is present in an amount of more than 5% by mass, turbidity occurs when the compound is mixed with another polymerizable monomer, so that a transparent copolymer is not obtained, or the elastic modulus of the polymer is too large, which is unpreferable.

Examples of the compound represented by the aforementioned formula (I) include the compounds of the following structures, but are not limited to these.

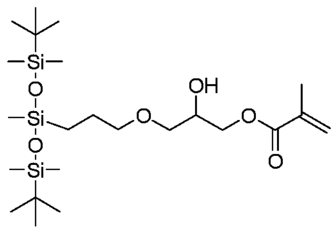 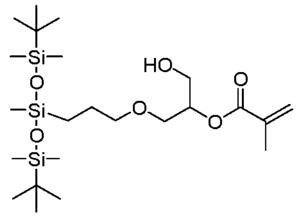

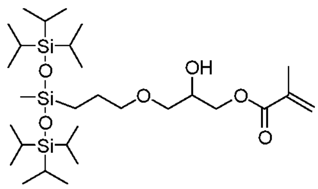 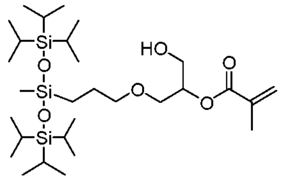

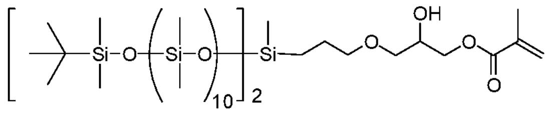

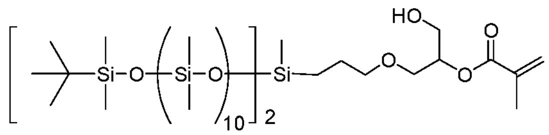

The siloxane compound of the present invention represented by the aforementioned formula (I) provides a polymer having repeating units derived from the addition polymerization of the (meth)acrylic group of the siloxane compound. The siloxane compound of the present invention has good compatibility with other compounds having a group polymerizable with the (meth)acrylic group of the present siloxane compound, such as a (meth)acrylic group (hereinafter referred to as a polymerizable monomer or hydrophilic monomer). Therefore, a colorless transparent copolymer is obtained by copolymerization with the polymerizable monomer. Homopolymerization of the present compound is also possible. As described above, the compound of the present invention provides a polymer having excellent hydrolysis resistance. In the manufacture of the copolymer, the amount of the siloxane compound of the present invention is preferably 50 to 90 parts by mass, more preferably 60 to 80 parts by mass, relative to 100 parts by mass of the total of the siloxane compound of the present invention and the polymerizable (hydrophilic) monomer.

The polymerizable monomers include acrylic monomers, such as (metha)acrylic acid, methyl(metha)acrylate,ethyl(metha)acrylate, (poly)ethylene glycol di(metha)acrylate, polyalkyleneglycol mono(metha)acrylate, polyalkyleneglycol monoalkylether (metha)acrylate, trifluoroethyl(metha)acrylate, 2-hydroxyethyl (metha)acrylate, and 2,3-dihydroxypropyl(metha)acrylate; acrylic acid derivatives such as N,N-dimethylacrylamide, N,N-diethylacrylamide, N-acryloylmorphorine,and N-methyl(metha)acrylamide; other unsaturated aliphatic or aromatic compounds such as chrotonic acid, cinnamic acid and vinyl benzoic acid; and siloxane monomers having a polymerizable groups such as a (metha) acrylic group. These may be used alone or in combination of two or more of them.

The copolymerization of the compound of the invention with the other polymerizable monomer(s) as described above may be carried out in any method known in the art. For example, it may be carried out using a polymerization initiator known in the art, such as a thermalpolymerization initiator or a photopolymerization initiator. Examples of the polymerization initiator include 2-hydroxy-2-methyl-1-phenyl-propan-1-on, azobisisobutyronitrile, azobisdimethylvaleronitrile, benzoyl peroxide, tert-butyl hydroperoxide, and cumene hydroperoxide. The polymerization initiator may be used alone or in combination. The amount of the polymerization initiator may be from 0.001 to 2 parts by mass, preferably from 0.01 to 1 part by mass, based on total 100 parts by mass of the polymerizable components.

The bulky group in the present polymer suppresses intramolecular hydrogen bonding of the hydroxyl groups present in the molecules. Therefore, the polymer is excellent in affinity with a solvent, solubility, and transparency.

The (co) polymer comprising the repeating units derived from the compound of the invention has excellent oxygen permeability, and transparency. Accordingly, the (co)polymer is suitable for manufacturing ophthalmic devices such as contact lenses, intraocular lenses and artificial corneas. There is no particular limitation with respect to a method for preparing an ophthalmic device using the (co)polymer, and any conventional method known in the art for manufacturing

ophthalmic devices may be used. For example, a machining process and a molding process may be used for forming a lens shape such as a contact lens and an intraocular lens.

## EXAMPLES

The present invention will be explained below in further detail with reference to a series of the Examples and the Comparative Examples. However, the present invention is in no way limited by these Examples.

Analytical methods performed in the following Synthesis Examples, Examples, Reference Examples, and Comparative Examples are as follows.

Conditions for Gas Chromatography

i. Apparatus and Parameters

Apparatus: Agilent GC system 7890A. Detector: flame ionization detector (FID). Column: J&W HP-5MS (0.25 mm × 30 m × 0.25 μm). Carrier gas: helium. Constant flow rate: 1.0 ml/min. Injected sample volume: 1.0 μL. Split ratio: 50: 1. Inlet temperature: 250 degrees C. Detector temperature: 300 degrees C.

ii. Temperature Regime

Initial temperature: 50 degrees C. Initiation period: 2 min. Gradient: 10 degrees C/min. Termination temperature: 300 degrees C (holding time: 10 minutes).

iii. Sample Preparation

A sample solution was diluted to 0.2 % by mass in acetone and placed into a GC vial.

[Synthesis Example 1

In a 1-liter three-necked eggplant flask equipped with a Dimroth condenser, a thermometer, and a dropping funnel was placed 370.0g of t-butyldimethylsilanol. Then, 200.0g of diethoxymethylsilane was added dropwise from the dropping funnel so that the internal temperature did not exceed 30 degrees C. After the completion of the dropwise addition, the reaction mixture was stirred at room temperature for 2 hours, and disappearance of diethoxymethylsilane was confirmed by gas chromatography (GC), which meant the completion of the reaction. The organic layer was transferred to a separatory funnel and washed with tap water three times. The organic layer was separated, and the solvent and any unreacted raw materials were distilled off at an internal temperature of 50 degrees C and a reduced pressure. The pot residue was subjected to distillation at a reduced pressure to obtain bis(t-butyldimethylsiloxy)methylsilane in a yield of 381.5g.

[Synthesis Example 2]

The procedures of Synthesis Example 1 were repeated, except that t-butyldimethylsilanol was replaced with diisopropylmethylsilanol. Bis(diisopropylmethylsiloxy)methylsilane was obtained.

[Synthesis Example 3]

The procedures of Synthesis Example 1 were repeated, except that t-butyldimethylsilanol was replaced with triisopropylsilanol. Bis(triisopropylsiloxy)methylsilane was obtained.

[Synthesis Example 4]

The procedures of Synthesis Example 1 were repeated, except that t-butyldimethylsilanol was replaced with triethylsilanol. Bis(triethylsiloxy)methylsilane was obtained.

[Synthesis Example 5]

The procedures of Synthesis Example 1 were repeated, except that t-butyldimethylsilanol was replaced with triethylsilanol, and diethoxymethylsilane was replaced with triethoxysilane. Tris(triethylsiloxy)silane was obtained.

[Synthesis Example 6]

To a 2-liter three-necked eggplantt flask equipped with a Dimroth condenser, thermometer, and dropping funnel, were placed 56.0g of t-butyldimethylsilanol and 56.0g of toluene. Then, 144.0g of a n-butyl lithium hexane solution was added dropwise from the dropping funnel. After completion of the dropwise addition, the reaction mixture was stirred at room temperature for 1 hour, and disappearance of the starting material was confirmed by gas chromatography (GC), which meant the completion of the reaction. 245.3 grams of hexamethylcyclotrisiloxane and 537.6 g of THF were added, and stirred at room temperature for 5 hours. Disappearance of hexamethylcyclotrisiloxane was confirmed by gas chromatography (GC), which meant the completion of the reaction. 30.0 grams of diethoxymethylsilane were added dropwise from a dropping funnel so that the internal temperature of the mixture did not exceed 30 degrees C. After completion of the dropwise addition, the reaction mixture was stirred at room temperature for 2 hours. Disappearance of diethoxymethylsilane was confirmed by gas chromatography (GC), which meant the competition of the reaction. The organic layer was transferred to a separatory funnel and washed with tap water three times. The organic layer was separated, and the solvent and any unreacted raw materials were distilled off at an internal temperature of 50 degrees C and a reduced pressure to obtain a compound represented by the following formula (6).

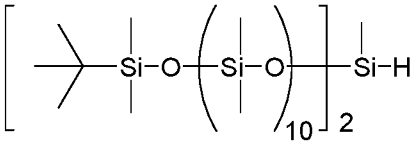

(6)

[Synthesis Example 7]

To a 1-liter three-necked eggplant flask equipped with a Dimroth condenser, a thermometer, and a dropping funnel, were placed 140.0g of bis(t-butyldimethylsiloxy)methylsilane obtained in Synthesis Example 1 and 160.0g of allylglycidyl ether, and the internal temperature was raised to 90 degrees C. Then, 1.0g of a toluene solution of a sodium bicarbonate-neutralized chloroplatinic acid/vinylsiloxane complex (platinum content: 0.5wt%) was added, and the reaction mixture was stirred at 100°C for 5 hours. Disappearance of bis(t-butyldimethylsiloxy)methylsilane was confirmed by gas chromatography (GC), which meant the completion of the reaction. Any unreacted raw materials were distilled off at an internal temperature of 100 degrees C and a reduced pressure to obtain 3-glycidoxypropylbis(t-butyldimethylsiloxy)methylsilane represented by the following formula (7) in a yield 178.5g. The total steric parameter value of the terminal siloxane is -7.52.

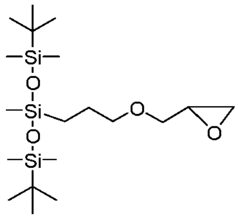

(7)

[Synthesis Example 8]

Synthesis Example 7 was repeated, except that bis(t-butyldimethylsiloxy)methylsilane was replaced with bis(diisopropylmethylsiloxy)methylsilane obtained in Synthesis Example 2 to obtain 3-glycidoxypropyl bis(diisopropylmethylsiloxy)methylsilane represented by formula (8). The total steric parameter value of the terminal siloxane is -6.36.

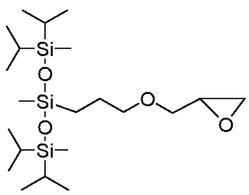

(8)

[Synthesis Example 9]

Synthesis Example 7 was repeated, except that bis(t-butyldimethylsiloxy)methylsilane was replaced with bis(triisopropylsiloxy)methylsilane obtained in Synthesis Example 3 to obtain 3-glycidoxypropyl bis(triisopropylsiloxy)methylsilane represented by formula (9). The total steric parameter value of the terminal siloxane is -10.36.

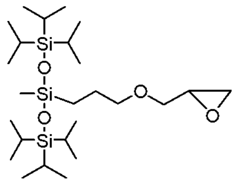

(9)

[Synthesis Example 10]

Synthesis Example 7 was repeated, except that bis(t-butyldimethylsiloxy)methylsilane was replaced with bis(triethylsiloxy)methylsilane obtained in Synthesis Example 4 to obtain 3-glycidoxypropyl bis(triethylsiloxy)methylsilane represented by formula (10). The total steric parameter value of the terminal siloxane is -4.00.

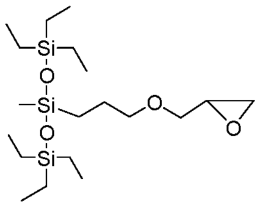

(10)

[Synthesis Example 11]

Synthesis Example 7 was repeated, except that bis(t-butyldimethylsiloxy)methylsilane was replaced with tris(triethylsiloxy)silane obtained in Synthesis Example 5 to obtain 3-glycidoxypropyl tris(triethylsiloxy)silane represented by formula (11). The total steric parameter value of the terminal siloxane is -6.00.

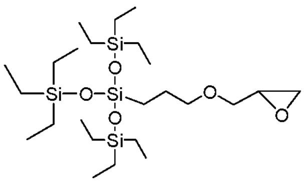

(11)

[Synthesis Example 12]

Synthesis Example 7 was repeated, except that bis(t-butyldimethylsiloxy)methylsilane was replaced with compound (6) obtained in Synthesis Example 6 to obtain a compound represented by the following formula (12). The total steric parameter value of the terminal siloxane is -7.52.

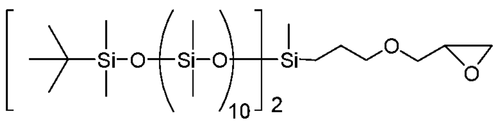

(12)

EXAMPLE 1

To a 300-mL, three-necked eggplant flask equipped with a Dimroth condenser and a thermometer, were placed 50.0g of the compound (7) obtained in Synthesis Example 7, 40.0g of methacrylic acid, and 4.0g of sodium methacrylate,

and the internal temperature was raised to 90 degrees C. Then, the reaction mixture was stirred at 90 degrees C. for 9 hours. Disappearance of the compound (7) was confirmed by gas chromatography (GC), which meant the completion of the reaction. 50.0 Grams of n-hexane were added, and the organic layer was transferred to a separatory funnel and washed with 50.0g of a 2 mol/L aqueous sodium hydroxide solution 4 times and with 50.0g of water 2 times. The organic layer was separated and the solvent was distilled off at an internal temperature of 70 degrees C and a reduced pressure. The obtained product was a compound represented by formula (13), wherein Q is represented by the following (1) or (1'). The yield was 51.2g and the purity was 97.4%.

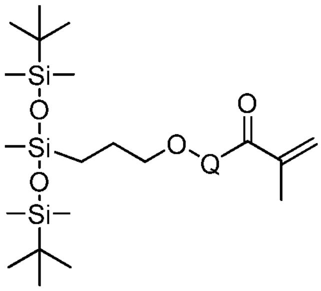

(13)

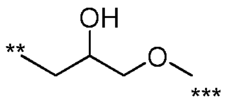

(1)

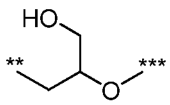

(1')

wherein the site indicated by "**" is the position of bonding to an oxygen atom, and the site indicated by "***" is the position of bonding to a carbon atom.

EXAMPLE 2

The procedures of Example 1 were repeated, except that the epoxy compound (7) was replaced with the epoxy compound (8) obtained in Synthesis Example 8 to obtain a compound represented by the following formula (14), wherein Q is represented by the aforementioned formula (1) or (1') in a purity of 97.1%.

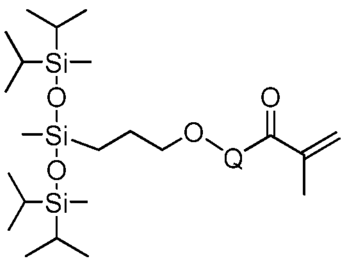

(14)

EXAMPLE 3

The procedures of Example 1 were repeated, except that the epoxy compound (7) was replaced with the epoxy compound (9) obtained in Synthesis Example 9 to obtain a compound represented by the following formula (15), wherein Q is represented by the aforementioned formula (1) or (1'). The purity was 98.4%.

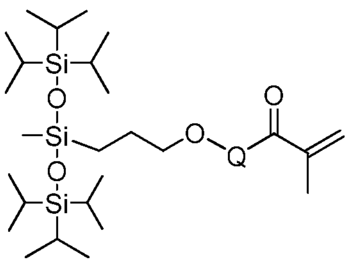

(15)

[Reference Example 1]

The procedures of Example 1 were repeated, except that the epoxy compound (7) was replaced with the epoxy compound (10) obtained in Synthesis Example 10 to obtain a compound represented by the following formula (16), wherein Q is represented by the aforementioned formula (1) or (1'). The purity was 91.8%.

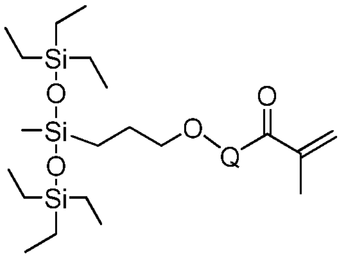

(16)

EXAMPLE 4

The procedures of Example 1 were repeated, except that the epoxy compound (7) was replaced with the epoxy compound (11) obtained in Synthesis Example 11 to obtain a compound represented by the following formula (17), wherein Q is represented by the aforementioned formula (1) or (1'). The purity was 95.7%.

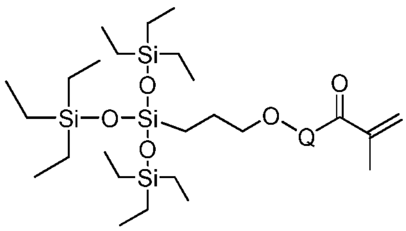

(17)

EXAMPLE 5

The procedures of Example 1 were repeated, except that the epoxy compound (7) was replaced with the epoxy compound (12) obtained in Synthetic Example 12, and the amount of methacrylic acid was 10.0g to obtain a compound represented by the following formula (18), wherein Q is represented by the aforementioned formula (1) or (1'). The purity was 96.4%.

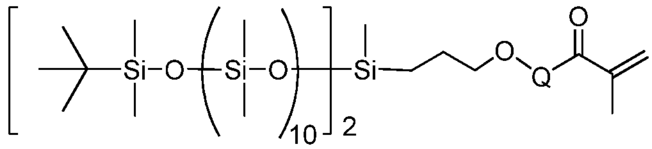

(18)

EXAMPLE 6

The procedures of Example 1 were repeated, except that sodium methacrylate was replaced with potassium methacrylate to obtain a compound represented by the aforementioned formula (13), wherein Q is represented by formula (1) or (1'). The purity was 97.2%.

EXAMPLE 7

The procedures of Example 1 were repeated, except that sodium methacrylate was replaced with tetraisopropoxy titanium to obtain a compound represented by the aforementioned formula (13) wherein Q is represented by formula (1) or (1'). The purity was 97.5%.

EXAMPLE 8

The procedures of Example 1 were repeated, except that sodium methacrylate was not used to obtain a compound represented by the aforementioned formula (13), wherein Q is represented by the aforementioned formula (1) or (1'). The purity was 97.2%.

EXAMPLE 9

The procedures of Example 1 were repeated, except that the amount of methacrylic acid was 20.0g to obtain a compound represented by the aforementioned formula (13), wherein Q is represented by the aforementioned formula (1) or (1'). The purity was 97.5%.

EXAMPLE 10

The procedures of Example 1 were repeated, except that methacrylic acid was replaced with acrylic acid, and sodium methacrylate was replaced with sodium acrylate to obtain a compound represented by the following formula (20), wherein Q is represented by the aforementioned formula (1) or (1'). The purity was 97.5%.

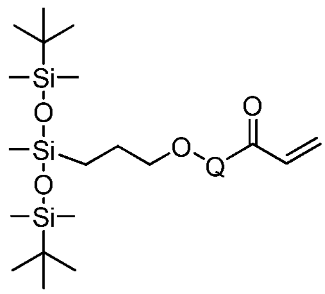

(20)

[Comparative Example 1]

The procedures of Example 1 were repeated, except that the epoxy compound (7) was replaced with an epoxy compound represented by the following formula (19) having a total steric parameter value of the terminal siloxane of 0 (zero) to obtain a compound represented by the following formula (21), wherein Q is represented by the aforementioned formula (1) or (1'). The purity was 82.1%.

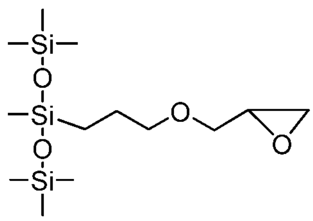

(19)

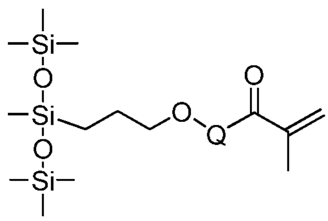

(21)

Table 3

| | Siloxane compound | Catalyst | Steric parameter | Purity (%) |
|---|---|---|---|---|
| Example 1 | (13) | sodium methacrylate | -7.52 | 97.4 |
| Example 2 | (14) | sodium methacrylate | -6.36 | 97.1 |
| Example 3 | (15) | sodium methacrylate | -10.36 | 98.4 |
| Example 4 | (17) | sodium methacrylate | -6.00 | 95.7 |
| Example 5 | (18) | sodium methacrylate | -7.52 | 96.4 |
| Example 6 | (13) | potassium methacrylate | -7.52 | 97.2 |
| Example 7 | (13) | titanium tetraisopropoxide | -7.52 | 97.5 |
| Example 8 | (13) | none | -7.52 | 97.2 |
| Example 9 | (13) | sodium methacrylate | -7.52 | 97.3 |
| Example 10 | (20) | sodium acrylate | -7.52 | 97.5 |
| Reference Example 1 | (16) | sodium methacrylate | -4.00 | 91.8 |
| Comparative Example 1 | (21) | sodium methacrylate | 0 | 82.1 |

As shown in Table 3, in Comparative Example 1, the total steric parameter value of the terminal $R^1R^2R^3Si$- group in the raw material epoxy compound is 0, so that side reactions due to the formed hydroxyl group and side reactions between the carboxylic acid and the siloxane moiety cannot be avoided, and the obtained siloxane compound is less pure. In Reference Example 1, the total steric parameter value of the terminal $R^1R^2R^3Si$- groups in the raw material epoxy compound was -4.00, so that the obtained siloxane compound had a higher purity than in Comparative Example 1, but the purity of below 95% is still insufficient. In contrast, in Examples 1-10, the total steric parameter value of the terminal $R^1R^2R^3Si$- group in the raw material epoxy compound is -5.00 or less, and the resulting siloxane compounds had such a high purity of greater than 95%. According to the preparation method of the present invention, even when the type of the carboxylic acid or the type of the catalyst was changed, the siloxane compound having a glycerol (meth)acrylate moiety was obtained with such a high purity of higher than 95%. Furthermore, the preparation method of the present invention does not require an industrially disadvantageous purification step, and the compound of the present invention is obtained simply and with a high purity.

[Examples 11-15, Reference Example 2, and Comparative Example 2]

A copolymer of the siloxane compound obtained above and 2-hydroxyethylmethacrylate (HEMA) was prepared as will be described below. Solubility of the copolymer in acetone was evaluated.

To a 100-mL three-necked eggplant flask equipped with a Dimroth condenser, a thermometer, and a nitrogen-introducing tube, were placed 10.0g of the siloxane compound each obtained in the Examples, 10.0g of HEMA, 20.0g of 2-propanol, and 0.01g of 2,2'-azodiisobutylonitrile, and nitrogen bubbling was conducted for 5 minutes. Then, the internal temperature was raised to 60 degrees C in a nitrogen atmosphere and the reaction mixture was stirred at 60 degrees C for 10 hours. The reaction was complete. The solvent and any unreacted substances were distilled off at an internal temperature of 90 degrees C and a reduced pressure. 5.0 grams of acetone were added to 5.0g of the obtained copolymer and the solubility in acetone was evaluated. The results are as shown in Table 4.

Table 4

| | Siloxane compound | Steric parameter | Solubility in acetone |
|---|---|---|---|
| Example 11 | (13) | -7.52 | G |
| Example 12 | (14) | -6.36 | G |
| Example 13 | (15) | -10.36 | G |
| Example 14 | (17) | -6.00 | G |
| Example 15 | (18) | -7.52 | G |
| Reference Example 2 | (16) | -4.00 | G |

(continued)

| | Siloxane compound | Steric parameter | Solubility in acetone |
|---|---|---|---|
| Comparative Example 2 | (20) | 0 | B |
| G: Uniform dissolution (transparent)<br>B: Partial dissolution or non-dissolution (opaque) | | | |

As shown in Table 4, the copolymer of the siloxane compound (SiGMA) of the Comparative Example with HEMA did not dissolve in acetone . On the other hand, the copolymer of the siloxane compound of the present invention dissolved in acetone and showed excellent solubility. Further, the compounds of the present invention have a high purity. Therefore, they are copolymerized with other polymerizable monomers to give a cured product which is colorless and transparent and has excellent oxygen permeability.

[Industrial Applicability]

According to the preparation method of the present invention, the siloxane compound having a glycerol (meth)acrylate moiety is obtained in a high purity. In addition, the siloxane compound of the present invention is excellent in compatibility with other polymerizable monomers such as (meth) acrylic monomers and their copolymers are suitable for application in medical devices including ophthalmic devices. Thus, the siloxane compound and the preparation process of the present invention are useful for the manufacture of ophthalmic devices, such as contact lens materials, intraocular lens materials, and artificial corneal materials.

## Claims

**1.** A method for preparing a (meth)acrylic group-containing siloxane, comprising a step of reacting a compound represented by the following formula (2):

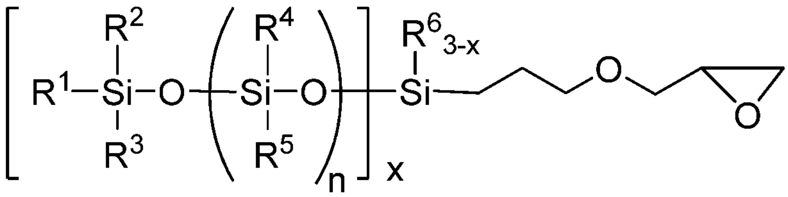

(2)

wherein $R^1$ to $R^3$ are, independently of each other, an unsubstituted monovalent hydrocarbon group having 1 to 10 carbon atoms, or a substituted form of the monovalent hydrocarbon group in which a part or all of the hydrogen atoms each bonded to a carbon atom are substituted each with a halogen atom, $R^4$ to $R^6$ are, independently of each other, a monovalent hydrocarbon group having 1 to 10 carbon atoms, x is an integer of from 1 to 3, and n is an integer of from 0 to 20;
in the case where $R^1$, $R^2$ and $R^3$ are all an unsubstituted hydrocarbon group, the $R^1R^2R^3Si$- group has a total steric parameter value of -5.00 or less, the parameter indicating steric bulkiness of the unsaturated hydrocarbon groups bonded to the silicon atom; and in the case where at least one of $R^1$, $R^2$ and $R^3$ is said substituted hydrocarbon group, the total steric parameter value of the group is -5.00 or less, supposing that all of the halogen atoms are replaced with a hydrogen atom, with (meth)acrylic acid to obtain a compound represented by the following formula (I):

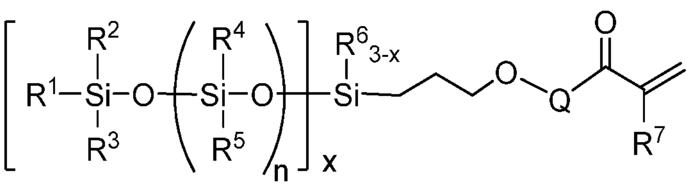

(I)

wherein Q is a divalent group represented by the following formula (1) or (1'), $R^1$ to $R^6$, n and x are as defined above, and $R^7$ is a hydrogen atom or a methyl group;

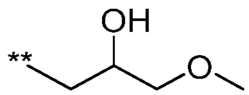 (1) 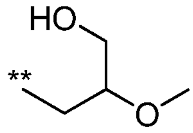 (1')

wherein the site indicated by "**" is the position of bonding to the oxygen atom in the formula (I).

2. The method according to claim 1, wherein the $R^1R^2R^3Si$- group in formula (2) has a total steric parameter value of -7.00 or less.

3. The method according to claim 1 or 2, wherein the reaction of the compound represented by formula (2) with (meth)acrylic acid is carried out in the presence of an alkali metal salt of (meth) acrylic acid.

4. The method according to any one of claims 1 to 3, wherein at least one of $R^1$, $R^2$ and $R^3$ in formulas (1) and (2) is selected from the group consisting of an isopropyl group, a t-butyl group and a phenyl group.

5. The method according to any one of claims 1 to 3, wherein the $R^1R^2R^3Si$- group in formulas (1) and (2) is selected from the following:

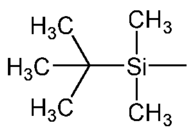
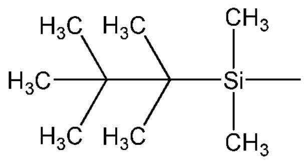
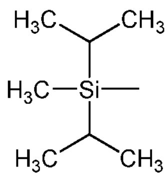
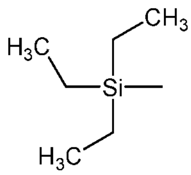
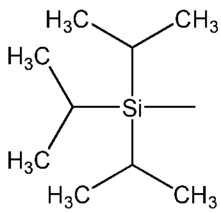
.

6. A compound represented by formula (I):

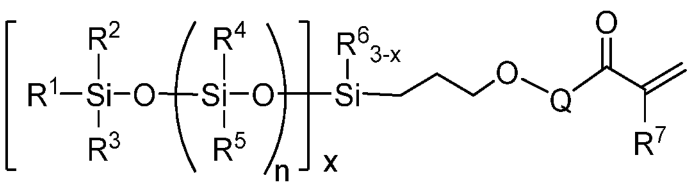
(I)

wherein Q is a divalent group represented by the following formula (1) or (1'),

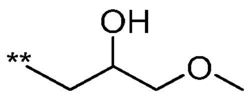 (1) 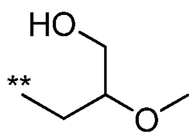 (1')

the site indicated by "**" is the position of bonding to the oxygen atom in the formula (I),

$R^1$ to $R^3$ are, independently of each other, an unsubstituted monovalent hydrocarbon group having 1 to 10 carbon atoms, or a substituted form of the monovalent hydrocarbon group in which a part or all of the hydrogen atoms each bonded to a carbon atom are substituted each with a halogen atom, $R^4$ to $R^6$ are, independently of each other, a monovalent hydrocarbon group having 1 to 10 carbon atoms, $R^7$ is a hydrogen atom or a methyl group, x is an integer of from 1 to 3, and n is an integer of from 0 to 20;
in the case where $R^1$, $R^2$ and $R^3$ are all an unsubstituted hydrocarbon group, the $R^1R^2R^3Si$- group has a total steric parameter value of -5.00 or less, the parameter indicating steric bulkiness of the unsaturated hydrocarbon groups bonded to the silicon atom; and in the case where at least one of $R^1$, $R^2$ and $R^3$ is said substituted hydrocarbon group, the total steric parameter value of the group is -5.00 or less, supposing that all of the halogen atoms are replaced with a hydrogen atom.

**7.** The compound according to claim 6, wherein one kind of the compound having specific n, x and $R^1$ to $R^7$, provided that Q may be a mixture of structural isomers represented by the formulas (1) and (1'), accounts for more than 95% by mass of the total mass of all kinds of the compound.

**8.** The compound according to claim 6 or 7, wherein the $R^1R^2R^3Si$-group has a total steric parameter value of -7.00 or less.

**9.** The compound according to any one of claims 6 to 8, wherein x is 2 or 3, and n is an integer of from 0 to 5.

**10.** The compound according to claim 9, wherein n is 0.

**11.** The compound according to any one of claims 6 to 10, wherein at least one of $R^1$, $R^2$ and $R^3$ in formula (I) is selected from the group consisting of an isopropyl group, a t-butyl group and a phenyl group.

**12.** The compound according to any one of claims 6 to 10, wherein the $R^1R^2R^3Si$- group in formula (I) is selected from the following:

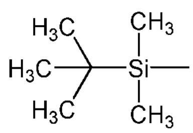
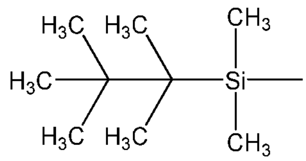

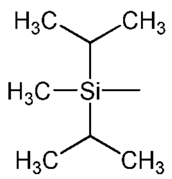
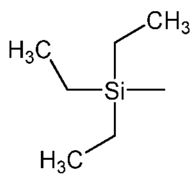
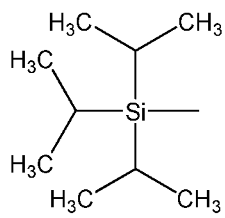
.

**13.** A polymer comprising a repeating unit derived by addition polymerization of the (meth)acryl group of the compound according to any one of claims 6 to 12.

**14.** A copolymer comprising a repeating unit derived by polymerization of the (meth)acryl group of the compound according to any one of claims 6 to 12 with one or more other compounds having a group polymerizable with the (meth)acryl group.

**15.** An ophthalmic device comprising the copolymer according to claim 14.

**16.** A compound represented by the formula (2):

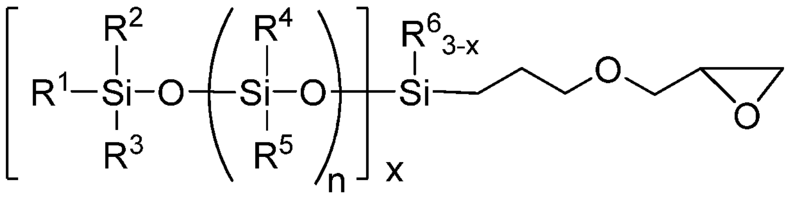

(2)

wherein $R^1$ to $R^3$ are, independently of each other, an unsubstituted monovalent hydrocarbon group having 1 to 10 carbon atoms, or a substituted form of the monovalent hydrocarbon group in which a part or all of the hydrogen atoms each bonded to a carbon atom are substituted each with a halogen atom, $R^4$ to $R^6$ are, independently of each other, a monovalent hydrocarbon group having 1 to 10 carbon atoms, x is an integer of from 1 to 3, and n is an integer of from 0 to 20;

in the case where $R^1$, $R^2$ and $R^3$ are all an unsubstituted hydrocarbon group, the $R^1R^2R^3Si$- group has a total steric parameter value of -5.00 or less, the parameter indicating steric bulkiness of the unsaturated hydrocarbon groups bonded to the silicon atom; and in the case where at least one of $R^1$, $R^2$ and $R^3$ is said substituted hydrocarbon group, the total steric parameter value of the group is -5.00 or less, supposing that all of the halogen atoms are replaced with a hydrogen atom.

**17.** The compound according to claim 16, wherein the $R^1R^2R^3Si$- group in formula (2) has a total steric parameter value of -7.00 or less.

**18.** The compound according to claim 16 or 17, wherein the $R^1R^2R^3Si$-group in formula (2) is selected from the following:

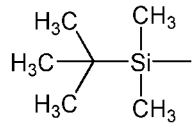

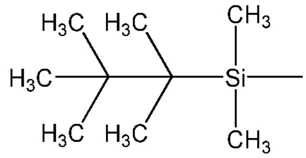

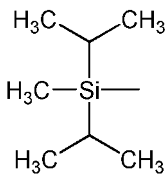

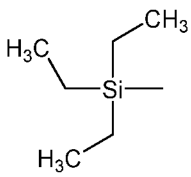

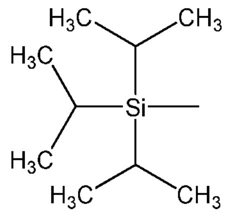

.

**INTERNATIONAL SEARCH REPORT**

International application No.
PCT/JP2018/041706

A. CLASSIFICATION OF SUBJECT MATTER
Int.Cl. C07F7/08(2006.01)i, C08F30/08(2006.01)i

According to International Patent Classification (IPC) or to both national classification and IPC

B. FIELDS SEARCHED

Minimum documentation searched (classification system followed by classification symbols)
Int.Cl. C07F7/08, C08F30/08

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X<br>A | WO 2009/085297 A2 (MOMENTIVE PERFORMANCE MATERIALS INC.) 09 July 2009, pages 27, 28, preparation example 3, fig. 3<br>& US 2009/0173912 A1 | 16-18<br>1-15 |
| X<br>A | WO 2009/085300 A2 (MOMENTIVE PERFORMANCE MATERIALS INC.) 09 July 2009, page 27, preparation example 3, fig. 3<br>& US 2009/0176893 A1 | 16-18<br>1-15 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 17.12.2018 | 08.01.2019 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2018/041706

C (Continuation). DOCUMENTS CONSIDERED TO BE RELEVANT

| Category* | Citation of document, with indication, where appropriate, of the relevant passages | Relevant to claim No. |
|---|---|---|
| A | JP 2010-510316 A (TORAY INDUSTRIES, INC.) 02 April 2010, claims, examples [0114]-[0120] & WO 2008/066758 A1, claims, examples [0092]-[0094] | 1-18 |
| A | JP 2009-542850 A (TORAY INDUSTRIES, INC.) 03 December 2009, claims, examples & WO 2008/005398 A2, claims, examples | 1-18 |
| A | JP 2008-274278 A (GELEST INC.) 13 November 2008, claims, examples & US 2008/0269429 A1, claims, examples | 1-18 |
| A | WO 2017/188046 A1 (SHIN ETSU CHEMICAL CO., LTD.) 02 November 2017, claims, paragraph [0046] & JP 2017-197464 A | 1-18 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP SHO5455455 B
- JP SHO5622325 B
- JP 2004182724 A
- JP 2006169140 A

### Non-patent literature cited in the description


- **SHIMIZU, N. et al.** A Quantitative Scale for the Structural Effect on Reactivity toward Nucleophilic Displacement at Silicon. *Chemistry Letters,* 1992, vol. 21 (7), 1263-1266
- **SHIMIZU, N. et al.** Prediction of Structural Effects of Trialkyl Groups on Reactivity toward Nucleophilic Displacement at Silicon. *Chemistry Letters,* 1993, vol. 22 (10), 1807-1810